# EUROPÄISCHE PATENTSCHRIFT

(11) **EP 3 615 613 B1**
(45) Veröffentlichungstag und Bekanntmachung des Hinweises auf die Patenterteilung: **10.08.2022**
(21) Anmeldenummer: 18718467.6
(22) Anmeldetag: 23.04.2018
(51) Int. Cl.: C08L 75/06, B29C 64/153

(54) **ADDITIVES FERTIGUNGSVERFAHREN MIT EINEM GEMISCHTEN THERMOPLASTISCHEN AUFBAUMATERIAL**
ADDITIVE PRODUCTION METHOD WITH A COMPOSITE THERMOPLASTIC STRUCTURAL MATERIAL
PROCÉDÉ DE FABRICATION ADDITIVE À L'AIDE D'UN MÉLANGE DE RECONSTITUANT THERMOPLASTIQUE

(30) Priorität: 24.04.2017 EP 17167681
(43) Veröffentlichungstag der Anmeldung: 04.03.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); METTMANN, Bettina, 41542 Dormagen (DE); KESSLER, Michael, 50969 Köln (DE); REICHERT, Peter, 41541 Dormagen (DE); WAGNER, Roland, 51375 Leverkusen (DE)
(74) Vertreter: Davepon, Björn
(86) Internationale Anmeldenummer: PCT/EP2018/060299
(87) Internationale Veröffentlichungsnummer: WO 2018/197392

(56) Entgegenhaltungen:
- DE-A1-102010 062 875
- US-A- 6 110 411
- ZIEGELMEIER STEFAN ET AL: "An experimental study into the effects of bulk and flow behaviour of laser sintering polymer powders on resulting part properties", JOURNAL OF MATERIALS PROCESSING TECHNOLOGY, ELSEVIER, NL, Bd. 215, 2. August 2014 (2014-08-02), Seiten 239-250, XP029064178, ISSN: 0924-0136, DOI: 10.1016/J.JMATPROTEC.2014.07.029

## Beschreibung

Die vorliegende Erfindung betrifft ein Verfahren zur Herstellung eines Gegenstands, umfassend den Schritt der Herstellung des Gegenstands mittels eines additiven Fertigungsverfahrens aus einem Aufbaumaterial, wobei das Aufbaumaterial eine Mischung einer Mehrzahl von pulverförmigen thermoplastischen Materialien umfasst, welche sich durch wenigstens eine mechanische Eigenschaft jeweils voneinander unterscheiden und wenigstens ein thermoplastisches Material ein thermoplastisches Polyurethan-Material ist. Der Einsatz von mehreren Materialien in einem additiven Fertigungsverfahren, auch als Multimaterial-3D-Druck bezeichnet, ist im Stand der Technik unter anderem im Zusammenhang mit später zu entfernenden Stützstrukturen bekannt. So können der herzustellende Gegenstand selbst aus einem nicht wasserlöslichen Material und die Stützstrukturen aus einem wasserlöslichen Material aufgebaut sein. Durch Herauslösen der Stützstrukturen wird dann der eigentliche Gegenstand erhalten.

EP 1 460 108 A1 offenbart ein Sinterpulver zum selektiven Laser-Sintern, wobei das Pulver zumindest ein Polyamid und zumindest ein Poly(N-methylmethacrylimid) (PMMI), ein Polymethylmethacrylat (PMMA) und/oder ein PMMI-PMMA-Copolymer aufweist.

Wenn unterschiedliche thermoplastische Materialien in einem Multimaterial-3D-Druckverfahren eingesetzt werden sollen, müssen die Verarbeitungsparameter während des Druckvorgangs einen Bereich umfassen, der sämtliches eingesetzte Material betrifft. So muss zum Beispiel die Verarbeitungstemperatur derart gewählt sein, dass sämtliches Material schmilzt. Im Fall von Polyamiden liegen die Schmelzpunkte des Materials jedoch zum Teil weit auseinander: PA 6.6 (260 °C), PA 6.10 (240 °C), PA 6 (220 °C), PA 6.12 (218 °C), PA 11 (198 °C) und PA 12 (178 °C). Somit sind einer Feinabstimmung des Aufbaumaterials durch Mischen verschiedener Polyamide gewisse Grenzen gesetzt.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, in dem die mechanischen und/oder chemischen Eigenschaften des damit hergestellten Gegenstandes variiert werden können bei gleichzeitig möglichst hoher stoffschlüssiger Verbindung der einzelnen Aufbaulagen innerhalb des Gegenstands. Des Weiteren war eine Aufgabe der Erfindung, einen Gegenstand möglichst kosteneffizient und/oder individualisiert und/oder ressourcenschonend herstellen zu können.

In einem Verfahren zur Herstellung eines Gegenstands, umfassend den Schritt der Herstellung des Gegenstands mittels eines additiven Fertigungsverfahrens aus einem Aufbaumaterial, umfasst das Aufbaumaterial eine Mischung einer Mehrzahl von pulverförmigen thermoplastischen Polyurethan-Materialien, welche sich voneinander durch ihre Shore-Härte (DIN ISO 7619-1) unterscheiden. Das Aufbaumaterial kann beispielsweise 2, 3, 4, 5, 6, 7, 8, 9 oder 10 sich in ihrer Shore-Härte unterscheidenden pulverförmigen thermoplastischen Polyurethan-Materialien umfassen. Beispiele für geeignete Gewichtsanteile, jeweils bezogen auf das Gesamtgewicht des Aufbaumaterials und wobei die Summe der Gewichtsanteile ≤ 100 Gewichts-% ergibt, sind (TPU = thermoplastisches Polyurethan):

| 1. TPU [Gew.-%] | 2. TPU [Gew.-%] | 3. TPU [Gew.-%] | 4. TPU [Gew.-%] |
|---|---|---|---|
| ≥ 10 -≤ 90 | ≥ 10 -≤ 90 | - | - |
| ≥ 30 - ≤ 70 | ≥ 30 -≤ 70 | - | - |
| ≥ 40 - ≤ 60 | ≥ 40 - ≤ 60 | - | - |
| ≥ 10 -≤ 80 | ≥ 10 - ≤ 80 | ≥ 10 -≤ 80 | - |
| ≥ 10 - ≤ 70 | ≥ 10 - ≤ 70 | ≥ 20 -≤ 80 | - |
| ≥ 40 - ≤ 59 | ≥ 40 - ≤ 59 | ≥ 1 -≤ 20 | - |
| ≥ 10 -≤ 70 | ≥ 10 -≤ 70 | ≥ 10 -≤ 70 | ≥ 10 -≤ 70 |
| ≥ 20 -≤ 70 | ≥ 10 -≤ 60 | ≥ 10 -≤ 60 | ≥ 10 -≤ 60 |
| ≥ 30 -≤ 78 | ≥ 20 -≤ 68 | ≥ 1 -≤ 49 | ≥ 1 -≤ 49 |

Neben den thermoplastischen Materialien kann das Aufbaumaterial noch weitere Additive wie Füllstoffe, Stabilisatoren und dergleichen enthalten. Der Gesamtgehalt an Additiven im Aufbaumaterial kann beispielsweise ≥ 0,1 Gewichts-% bis ≤ 50 Gewichts-%, bevorzugt ≥ 0,5 Gewichts-% bis ≤ 30 Gewichts-%, betragen.

Das Aufbaumaterial kann vor Beginn der Herstellung des Gegenstands mittels des additiven Fertigungsverfahrens als Gemisch der verschiedenen thermoplastischen Materialien bereitgestellt werden. Als Gemische kommen beispielsweise Pulvergemische für Lasersinterverfahren in Betracht. Es ist alternativ möglich, dass das Aufbaumaterial während der Herstellung des Gegenstands mittels des additiven Fertigungsverfahrens aus den verschiedenen thermoplastischen Materialien in situ gemischt wird. Vorzugsweise ist in dieser Ausführungsform das Mischungsverhältnis der verschiedenen thermoplastischen Materialien zeitlich beziehungsweise räumlich, in Bezug auf einzelne Lagen oder in Bezug auf einzelne Volumenelemente (Voxel) einer Lage, veränderlich. Dann können Gegenstände mit räumlich variierenden mechanischen Eigenschaften hergestellt werden.

Es ist bevorzugt, dass mindestens 90 Gewichts-% der Partikel der eingesetzten pulverförmigen Materialien einen Teilchendurchmesser von ≤ 0.25 mm, bevorzugt ≤ 0.2 mm, besonders bevorzugt ≤ 0.15 mm aufweisen.

Für die Herstellung der im erfindungsgemäßen Verfahren einsetzbaren thermoplastischen Polyurethane geeignete Polyisocyanate können symmetrische Polyisocyanate, nicht-symmetrische Polyisocyanate oder deren Mischungen sein. Beispiele für symmetrische Polyisocyanate sind 4,4'-MDI, Decandiisocyanat, Hexandiisocyanat (HDI), Petandiisocyanat (PDI) und Butandiisocyanat (BDI)

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind 2,2,4-Trimethylhexamethylendiisocyanat, Ethylethylendiisocyanat, nicht-symmetrische Isomere des Dicyclohexylmethandiisocyanat (H₁₂-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethan-diisocyanat (MDI), 2,4- und 2,6-Toluylendiisocyanat (TDI) sowie Derivate der aufgeführten Diisocyanate, insbesondere dimerisierte oder trimerisierte Typen.

Bevorzugt sind 4,4'-MDI, H₁₂-MDI, HDI, PDI oder eine Mischung enthaltend IPDI und/oder H₁₂-MDI und HDI und/oder PDI als Polyisocyanatkomponente.

Die Polyolkomponente kann ein Polyol enthalten, das ausgewählt ist aus der Gruppe: Polyetherpolyole, Polyesterpolyole, Polyetheresterpolyole, Polycarbonatpolyole oder einer Kombination aus mindestens zwei hiervon.

Gegebenenfalls können bei der Reaktion zu den Polyurethanen weiterhin Diole des Molekulargewichtsbereichs von ≥ 62 bis ≤ 600 g/mol als Kettenverlängerungsmittel eingesetzt werden.

Thermoplastische Polyurethane haben im Fall des Einsatzes eines ersten und eines zweiten Polyurethan-Materials den Vorteil, dass Materialien in einem vergleichsweise kleinen Fenster der Verarbeitungsbedingungen, insbesondere der Verarbeitungstemperatur, eine große Bandbreite an mechanischen und/oder chemischen Eigenschaften zur Verfügung steht. So lassen sich unterschiedliche thermoplastische Polyurethane mit eine Shore-Härte (DIN ISO 7619-1) von ≥ 40A bis ≤ 90D in einem Temperaturbereich von ≥ 180 °C bis ≤ 260 °C gemeinsam verarbeiten, wobei das nach dem Aufschmelzen und Abkühlen erhaltene Material bevorzugt eine Shore-Härte aufweist, welche zwischen der größten und der kleinsten Härte der eingesetzten Polyurethane liegt und/oder eine Reißdehnung aufweist, welche zwischen der größten und der kleinsten Reißdehnung der eingesetzten Polyurethane liegt. Dieses ermöglicht eine feine Abstimmung der Polyurethaneigenschaften, welche selbstverständlich auch im herzustellenden Gegenstand selbst räumlich variieren können. Bedingt durch die chemische Kompatibilität der Polyurethane untereinander lässt sich im erfindungsgemäßen Verfahren das aufgeschmolzene und wieder abgekühlte Aufbaumaterial wenigstens an der Partikelgrenzfläche als ein Polymerblend charakterisieren, der sich von klassischen Polymerblends insofern unterscheidet, dass zwischen den Partikeln Grenzbereiche entstehen, die sich nicht nur physikalisch als Mischung, sondern auch chemisch von den Materialien im Inneren der eingesetzten Partikel unterscheiden. In Polyurethanen als Vertreter der Additionspolymere können bei den eingesetzten Verarbeitungstemperaturen reversible Öffnungen die Urethangruppen sich reversibel öffnen und Umurethanisierungen auftreten. Wenn beispielsweise zwei nebeneinander liegende Partikel aufgeschmolzen werden und das eine Partikel aus einem ersten Polyurethan auf der Basis eines ersten Isocyanats und eines ersten Polyols aufgebaut ist und das andere Partikel aus einem zweiten Polyurethan auf der Basis eines zweiten Isocyanats und eines zweiten Polyols aufgebaut ist, können durch Umurethanisierungen in der Kontaktzone auch Polyurethane auf der Basis des ersten Isocyanats und des zweiten Polyols sowie auf der Basis des zweiten Isocyanats und des ersten Polyols vorliegen.

Im Gegensatz zu üblichen Schmelzpolymerblends kann das Verhältnis der physikalisch und chemisch gemischten Polymer-Phasen sehr präzise über die Partikelgrößen und Sintertemperaturen gesteuert werden, so dass Polymerblends mit neuen hochkontrollierten Eigenschaften entstehen, die über klassische Schmelzeblends nicht zugänglich sind.

Diese über Mischen von kompatiblen grenzflächenreaktiven (gemeint ist die Umurethanisierungsreaktion) Komponenten bevorzugt erhaltenen Eigenschaften sind an der verbesserten Festigkeit, Abriebbeständigkeit und bevorzugt dem linearen Verhältnis der Bruchdehnungen ablesbar. Über gezielte Konditionierung oder die verfahrensbedingte Temperaturbelastung im SLS-Bauraum nahe der Schmelztemperatur der beteiligten Mischphasen können diese Effekte angepasst werden. Bevorzugt erfahren die Mischphasen Temperaturbelastungen von ≥ 50° C, besonders bevorzugt ≥ 40° C und ganz besonders bevorzugt > 30 °C unterhalb der Schmelztemperatur von mindestens 1 Minute, bevorzugt mindestens 3 Minuten, besonders bevorzugt mindestens 20 Minuten und ganz besonders bevorzugt mindestens 30 Minuten.

In einer bevorzugten Ausführungsform umfasst das Aufbaumaterial ein erstes pulverförmiges thermoplastisches Polyurethan-Material und ein zweites pulverförmiges thermoplastisches Polyurethan-Material, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist und die Differenz der Shore-Härten zwischen erstem und zweitem pulverförmigen thermoplastischen Polyurethan-Material ≥ 2A bis ≤ 40A und/oder ≥ 2D bis ≤ 60D beträgt.

Ein Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 70 A bis ≤ 80A und ein zweites pulverförmiges thermoplastisches Polyurethan-Material mit einer Shore-Härte (DIN ISO 7619-1) von ≥ 85A bis ≤ 95A. Die Differenz der Shore-Härten zwischen erstem und zweitem pulverförmigen thermoplastischen Polyurethan-Material beträgt ≥ 5A bis ≤ 25A.

Ein weiteres Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 70A und ein zweites pulverförmiges thermoplastisches Polyurethan-Material mit einer Shore-Härte (DIN ISO 7619-1) von ≥ 80A bis ≤ 90A. Die Differenz der Shore-Härten zwischen erstem und zweitem pulverförmigen thermoplastischen Polyurethan-Material beträgt ≥ 10A bis ≤ 20A.

In einer weiteren bevorzugten Ausführungsform umfasst das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist, das dritte pulverförmige thermoplastische Polyurethan-Material eine Shore-Härte (DIN ISO 7619-1) von ≥ 40A bis ≤ 90 aufweist, die Differenz der Shore-Härten zwischen erstem und zweitem pulverförmigen thermoplastischen Polyurethan-Material ≥ 2A bis ≤ 40A und/oder ≥ 2D bis ≤ 60D beträgt und die Differenz der Shore-Härten zwischen zweitem und dritten pulverförmigen thermoplastischen Polyurethan-Material ≥ 2A bis ≤ 40A und/oder ≥ 2D bis ≤ 60D beträgt.

Ein Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 70A, ein zweites pulverförmiges thermoplastisches Polyurethan-Material mit einer Shore-Härte (DIN ISO 7619-1) von ≥ 75A bis ≤ 85A und ein drittes pulverförmiges thermoplastisches Polyurethan-Material mit einer Shore-Härte (DIN ISO 7619-1) von ≥ 90A bis ≤ 90D. Die Differenz der Shore-Härten zwischen erstem und zweitem pulverförmigen thermoplastischen Polyurethan-Material beträgt ≥ 2A bis ≤ 40A und die Differenz der Shore-Härten zwischen zweitem und drittem pulverförmigen thermoplastischen Polyurethan-Material beträgt ≥ 2A bis ≤ 60D.

Ein weiteres Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 65A, ein zweites pulverförmiges thermoplastisches Polyurethan-Material mit einer Shore-Härte (DIN ISO 7619-1) von ≥ 70A bis ≤ 75A und ein drittes pulverförmiges thermoplastisches Polyurethan-Material mit einer Shore-Härte (DIN ISO 7619-1) von ≥ 80A bis ≤ 90A. Die Differenz der Shore-Härten zwischen erstem und zweitem pulverförmigen thermoplastischen Polyurethan-Material beträgt ≥ 5A bis ≤ 15A und die Differenz der Shore-Härten zwischen zweitem und drittem pulverförmigen thermoplastischen Polyurethan-Material beträgt ≥ 5A bis ≤ 15A.

In einer weiteren bevorzugten Ausführungsform umfasst das Aufbaumaterial eine Mehrzahl von pulverförmigen thermoplastischen Polyurethan-Materialien, welche sich voneinander durch ihre Reißdehnung (DIN 53504, 200 mm/min) unterscheiden. Das Aufbaumaterial kann beispielsweise 2, 3, 4, 5, 6, 7, 8, 9 oder 10 sich in ihrer Reißdehnung unterscheidenden thermoplastischen Polyurethan-Materialien umfassen.

In einer weiteren bevorzugten Ausführungsform umfasst das Aufbaumaterial ein erstes pulverförmiges thermoplastisches Polyurethan-Material und ein zweites pulverförmiges thermoplastisches Polyurethan-Material, wobei das erste pulverförmige thermoplastische Polyurethan-Material eine Reißdehnung (DIN 53504, 200 mm/min) von ≥ 200% bis ≤ 800% aufweist, das zweite pulverförmige thermoplastische Polyurethan-Material eine Reißdehnung (DIN 53504, 200 mm/min) von ≥ 100% bis ≤ 400% aufweist und die Differenz der Reißdehnungen zwischen erstem und zweitem pulverförmigen thermoplastischen Polyurethan-Material ≥ 50 Prozentpunkte bis ≤ 700 Prozentpunkte beträgt.

Ein Beispiel für solch ein erfindungsgemäß geeignetes Aufbaumaterial umfasst ein erstes pulverförmiges thermoplastische Polyurethan-Material mit einer Reißdehnung (DIN 53504, 200 mm/min) von ≥ 300% bis ≤ 500% und ein zweites pulverförmiges thermoplastische Polyurethan-Material mit einer Reißdehnung (DIN 53504, 200 mm/min) von ≥ 100% bis ≤ 400%. Die Differenz der Reißdehnungen zwischen erstem und zweitem pulverförmigen thermoplastischen Polyurethan-Material beträgt ≥ 50 Prozentpunkte bis ≤ 400 Prozentpunkte.

Ein weiteres Beispiel für solch ein erfindungsgemäß geeignetes Aufbaumaterial umfasst ein erstes pulverförmiges thermoplastische Polyurethan-Material mit einer Reißdehnung (DIN 53504, 200 mm/min) von ≥ 150% bis ≤ 250% und ein zweites pulverförmiges thermoplastische Polyurethan-Material mit einer Reißdehnung (DIN 53504, 200 mm/min) von ≥ 200% bis ≤ 450%. Die Differenz der Reißdehnungen zwischen erstem und zweitem pulverförmigen thermoplastischen Polyurethan-Material beträgt ≥ 50 Prozentpunkte bis ≤ 300 Prozentpunkte.

In einer weiteren bevorzugten Ausführungsform umfasst das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material, wobei das erste pulverförmige thermoplastische Polyurethan-Material eine Reißdehnung (DIN 53504, 200 mm/min) von ≥ 200% bis ≤ 600% aufweist, das zweite pulverförmige thermoplastische Polyurethan-Material eine Reißdehnung (DIN 53504, 200 mm/min) von ≥ 200% bis ≤ 600% aufweist, das dritte pulverförmige thermoplastische Polyurethan-Material eine Reißdehnung (DIN 53504, 200 mm/min) von ≥ 200% bis ≤ 600% aufweist, die Differenz der Reißdehnungen zwischen erstem und zweitem pulverförmigen thermoplastischen Polyurethan-Material ≥ 50 Prozentpunkte bis ≤ 100 Prozentpunkte beträgt und die die Differenz der Reißdehnungen zwischen zweitem und drittem pulverförmigen thermoplastischen Polyurethan-Material ≥ 50 Prozentpunkte bis ≤ 100 Prozentpunkte beträgt.

Ein Beispiel für solch ein erfindungsgemäß geeignetes Aufbaumaterial umfasst ein erstes pulverförmiges thermoplastische Polyurethan-Material mit einer Reißdehnung (DIN 53504, 200 mm/min) von ≥ 400% bis ≤ 500%, ein zweites pulverförmiges thermoplastische Polyurethan-Material mit einer Reißdehnung (DIN 53504, 200 mm/min) von ≥ 300% bis ≤ 400% und ein drittes pulverförmiges thermoplastische Polyurethan-Material mit einer Reißdehnung (DIN 53504, 200 mm/min) von ≥ 200% bis ≤ 300%. Die Differenz der Reißdehnungen zwischen erstem und zweitem pulverförmigen thermoplastischen Polyurethan-Material beträgt ≥ 50 Prozentpunkte bis ≤ 100 Prozentpunkte und die Differenz der Reißdehnungen zwischen zweitem und drittem pulverförmigen thermoplastischen Polyurethan-Material beträgt ≥ 50 Prozentpunkte bis ≤ 100 Prozentpunkte.

Ein weiteres Beispiel für solch ein erfindungsgemäß geeignetes Aufbaumaterial umfasst ein erstes thermoplastische Polyurethan-Material mit einer Reißdehnung (DIN 53504, 200 mm/min) von ≥ 430% bis ≤ 470%, ein zweites thermoplastische Polyurethan-Material mit einer Reißdehnung (DIN 53504, 200 mm/min) von ≥ 330% bis ≤ 370% und ein drittes thermoplastische Polyurethan-Material mit einer Reißdehnung (DIN 53504, 200 mm/min) von ≥ 230% bis ≤ 270%. Die Differenz der Reißdehnungen zwischen erstem und zweitem thermoplastischen Polyurethan-Material beträgt ≥ 70 Prozentpunkte bis ≤ 85 Prozentpunkte und die Differenz der Reißdehnungen zwischen zweitem und drittem thermoplastischen Polyurethan-Material beträgt ≥ 70 Prozentpunkte bis ≤ 85 Prozentpunkte.

In einer weiteren bevorzugten Ausführungsform weist das Aufbaumaterial hinsichtlich seiner schmelzbaren Anteile einen Schmelzbereich (DSC, differential scanning calorimetry; 2. Aufheizung mit Aufheizrate 20 K/min.) auf, welcher im Temperaturbereich von ≥ 30 °C bis ≤ 90 °C liegt. Der Schmelzbereich liegt vorzugsweise in einem Temperaturbereich von ≥ 35 °C bis ≤ 80 °C und mehr bevorzugt von ≥ 45 °C bis ≤ 70 °C. Bei der DSC-Messung zur Bestimmung des Schmelzbereichs wird das Material folgendem Temperaturzyklus unterworfen: 1 Minute bei -60 °C, danach Aufheizen auf 240 °C mit 20 Kelvin/Minute, dann Abkühlen auf -60 °C mit 50 Kelvin/Minute, dann 1 Minute bei -60 °C, dann Aufheizen auf 150 °C mit 20 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 80 °C, bevorzugt ≤ 60 °C und mehr bevorzugt ≤ 50 °C beträgt.

In einer weiteren bevorzugten Ausführungsform weist das Aufbaumaterial hinsichtlich seiner schmelzbaren Anteile einen Schmelzbereich (DSC, differential scanning calorimetry; 2. Aufheizung mit Aufheizrate 20 K/min.) auf, welcher im Temperaturbereich von ≥ 100 °C bis ≤ 240 °C liegt. Der Schmelzbereich liegt vorzugsweise in einem Temperaturbereich von ≥ 110 °C bis ≤ 230 °C und mehr bevorzugt von ≥ 120 °C bis ≤ 220 °C. Bei der DSC-Messung zur Bestimmung des Schmelzbereichs wird das Material folgendem Temperaturzyklus unterworfen: 1 Minute bei -60 °C, danach Aufheizen auf 260 °C mit 20 Kelvin/Minute, dann Abkühlen auf -60 °C mit 50 Kelvin/Minute, dann 1 Minute bei -60 °C, dann Aufheizen auf 260 °C mit 20 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 80 °C, bevorzugt ≤ 60 °C und mehr bevorzugt ≤ 50 °C beträgt.

In einer weiteren bevorzugten Ausführungsform umfasst die Herstellung des Gegenstands mittels des additiven Fertigungsverfahrens die Schritte:
- Auftragen einer Schicht aus das Aufbaumaterial aufweisenden Partikeln auf eine Zielfläche;
- Einwirken von Energie auf einen ausgewählten Teil der Schicht, entsprechend einem Querschnitt des Gegenstandes, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Einwirken von Energie durchgeführt werden. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform ist wenigstens eines der thermoplastischen Materialien in dem Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist. Insbesondere kann die Polyolkomponente ein Polyesterpolyol aufweisen, welches einen Stockpunkt (No Flow Point, ASTM D5985) von ≥ 25 °C bis ≤ 90 °C, vorzugsweise ≥ 35 °C bis ≤ 80 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen α,ω-C₄- bis C₁₀-Dicarbonsäuren mit einem oder mehreren C₂- bis C₁₀-Diolen. Sie weisen bevorzugt ein zahlenmittleres Molekulargewicht Mₙ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI oder 4,4'-MDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Bevorzugte Polyesterpolyole sind weiter durch ringöffnende Lactonpolymerisation erhältlich, besonders bevorzugt auf Basis von Epsiloncaprolacton.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht Mₙ (GPC, gegen Polystyrol-Standards) von ≥ 4000 g/mol bis ≤ 6000 g/mol aufweist. Solch ein Polyurethan kann einen Betrag der komplexen Viskosität |*η*^{∗}| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 30 Minuten, mehr bevorzugt ≥ 10 Minuten bis ≤ 15 Minuten), ein Speichermodul G' (bestimmt bei der jeweils herrschenden Temperatur mit einem Platte/Platte-Oszillationsviskosimeter gemäß ISO 6721-10 bei einer Scherrate von 1/s) von ≥ 100 kPa bis ≤ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10 bei einer Scherrate von 1/s) von ≥ 10 MPa aufweist.

In einer weiteren bevorzugten Ausführungsform ist wenigstens eines der thermoplastischen Materialien in dem Aufbaumaterial ein thermoplastisches Polyurethan-Elastomer, das erhältlich ist aus der Reaktion der Komponenten:
aa) mindestens ein organisches Diisocyanat
bb) mindestens eine mit gegenüber Isocyanatgruppen reaktiven Gruppen aufweisenden Verbindung mit einem zahlenmittleren Molekulargewicht (Mₙ) von ≥ 500 g/mol bis ≤ 6000 g/mol und einer zahlenmittleren Funktionalität der Gesamtheit der Komponenten unter b) von ≥ 1,8 bis ≤ 2,5
cc) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Bevorzugte Diisocyanate aa) sind 4,4'-MDI und 1,6-HDI und/oder PDI. Als NCO-reaktive Komponente b) sind Polyesterpolyole aus Dicarbonsäuren mit 2 bis 12 Kohlenstoffatomen, vorzugsweise 4 bis 6 Kohlenstoffatomen, und mehrwertigen Alkoholen. Als Polyesterdiole bb) vorzugsweise verwendet werden Ethandiolpolyadipate, 1,4-Butandiolpolyadipate, Ethandiol- 1 ,4-Butandiolpolyadipate, 1,6-Hexandiol-neopentylglykolpolyadipate, 1,6-Hexandiol-1,4-butandiolpolyadipate und Polycaprolactone.

Als Kettenverlängerungsmittel cc) werden vorzugsweise aliphatische Diole mit 2 bis 14 Kohlenstoffatomen eingesetzt, wie z.B. Ethandiol, 1,2-Propandiol, 1,3-Propandiol, 1 ,4-Butandiol, 2,3- Butandiol, 1,5-Pentandiol, 1,6-Hexandiol, Diethylenglykol und Dipropylenglykol.

### Beispiele

Die vorliegende Erfindung wird anhand der nachfolgenden Beispiele näher erläutert. Es bedeuten:
TPU 1: pulverförmiges esterbasiertes thermoplastisches Polyurethan mit einer Glasübergangstemperatur (ISO 6721-1) von -14 °C bis -13 °C, einer Shore A-Härte (ISO 868) des gesinterten Probenkörpers von 87 bis 89, einer Vicat-Erweichungstemperatur (VST A, ISO 306) von 89 °C bis 91 °C und einer Schmelztemperatur (ISO 11357) von 159 °C bis 161 °C.
TPU 2: pulverförmiges esterbasiertes thermoplastisches Polyurethan mit einer Glasübergangstemperatur (ISO 6721-1) von 3 °C bis 5 °C, einer Shore A-Härte (ISO 868) des gesinterten Probenkörpers von 96 bis 98 und einer Schmelztemperatur (ISO 11357) von 179 °C bis 181 °C.

### Beispiel 1

Es wurden Mischungen von TPU 1 und TPU 2 in den in der nachfolgenden Tabelle angegebenen Gewichtsverhältnissen angefertigt:

| **Nr.** | **TPU 1 [Gew.-%]** | **TPU 2 [Gew.-%]** |
|---|---|---|
| 1-1 (Vergleich) | 100 | 0 |
| 1-2 | 70 | 30 |
| 1-3 | 50 | 50 |
| 1-4 | 30 | 70 |
| 1-5 (Vergleich) | 0 | 100 |

Aus den Pulvermischungen sowie aus unvermischtem TPU 1 und TPU 2 wurden in einem 3D-Druckverfahren durch Lasersintern (300 inches/s Scangeschwindigkeit) S2-Zugversuchsstäbe hergestellt. Je fünf Zugversuchsstäbe aus den jeweiligen Pulvern/Pulvermischungen wurden in einem Zugversuch in Anlehnung an DIN 53504 getestet. Die Mittelwerte der erhaltenen Ergebnisse sind in der nachfolgenden Tabelle aufgeführt.

| **Nr.** | **Bruchdehnung ε_{B} [%]** | **Dichte [g/cm³]** |
|---|---|---|
| 1-1 (Vergleich) | 352 | |
| 1-2 | 280 | 0,96 |
| 1-3 | 238 | 0,93 |
| 1-4 | 197 | 0,80 |
| 1-5 (Vergleich) | 135 | |

Man erkennt einen in guter Näherung linearen Zusammenhang zwischen der Bruchdehnung und den Mischungsverhältnissen der TPU-Pulver.

## Patentansprüche

1. Verfahren zur Herstellung eines Gegenstands, umfassend den Schritt der Herstellung des Gegenstands mittels eines additiven Fertigungsverfahrens aus einem Aufbaumaterial, **dadurch gekennzeichnet, dass** das Aufbaumaterial eine Mischung einer Mehrzahl von pulverförmigen thermoplastischen Polyurethan-Materialien umfasst, welche sich voneinander durch ihre Shore-Härte (DIN ISO 7619-1) unterscheiden.

2. Verfahren gemäß Anspruch 1, **dadurch gekennzeichnet, dass** das Aufbaumaterial ein erstes pulverförmiges thermoplastisches Polyurethan-Material und ein zweites pulverförmiges thermoplastisches Polyurethan-Material umfasst, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist und die Differenz der Shore-Härten zwischen erstem und zweitem pulverförmigen thermoplastischen Polyurethan-Material ≥ 2A bis ≤ 40A und/oder ≥ 2D bis ≤ 60D beträgt.

3. Verfahren gemäß Anspruch 1, **dadurch gekennzeichnet, dass** das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material umfasst, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist, das dritte pulverförmige thermoplastische Polyurethan-Material eine Shore-Härte (DIN ISO 7619-1) von ≥ 40A bis ≤ 90D aufweist, die Differenz der Shore-Härten zwischen erstem und zweitem pulverförmigen thermoplastischen Polyurethan-Material ≥ 2A bis ≤ 40A und/oder ≥ 2D bis ≤ 60D beträgt und die Differenz der Shore-Härten zwischen zweitem und dritten pulverförmigen thermoplastischen Polyurethan-Material ≥ 5A bis ≤ 30A und/oder ≥ 5D bis ≤ 30D beträgt.

4. Verfahren gemäß einem der Ansprüche 1 bis 3, **dadurch gekennzeichnet, dass** das Aufbaumaterial eine Mehrzahl von pulverförmigen thermoplastischen Polyurethan-Materialien umfasst, welche sich voneinander durch ihre Reißdehnung (DIN 53504, 200 mm/min) unterscheiden.

5. Verfahren gemäß Anspruch 4, **dadurch gekennzeichnet, dass** das Aufbaumaterial ein erstes pulverförmiges thermoplastisches Polyurethan-Material und ein zweites pulverförmiges thermoplastisches Polyurethan-Material umfasst, wobei das erste pulverförmige thermoplastische Polyurethan-Material eine Reißdehnung (DIN 53504, 200 mm/min) von ≥ 200% bis ≤ 800% aufweist, das zweite pulverförmige thermoplastische Polyurethan-Material eine Reißdehnung (DIN 53504, 200 mm/min) von ≥ 100% bis ≤ 400% aufweist und die Differenz der Reißdehnungen zwischen erstem und zweitem pulverförmigen thermoplastischen Polyurethan-Material ≥ 50 Prozentpunkte bis ≤ 700 Prozentpunkte beträgt.

6. Verfahren gemäß Anspruch 4, **dadurch gekennzeichnet, dass** das Aufbaumaterial ein erstes thermoplastisches Polyurethan-Material, ein zweites thermoplastisches Polyurethan-Material und ein drittes thermoplastisches Polyurethan-Material umfasst, wobei das erste thermoplastische Polyurethan-Material eine Reißdehnung (DIN 53504, 200 mm/min) von ≥ 200% bis ≤ 600% aufweist, das zweite thermoplastische Polyurethan-Material eine Reißdehnung (DIN 53504, 200 mm/min) von ≥ 200% bis ≤ 600% aufweist, das dritte thermoplastische Polyurethan-Material eine Reißdehnung (DIN 53504, 200 mm/min) von ≥ 200% bis ≤ 600% aufweist, die Differenz der Reißdehnungen zwischen erstem und zweitem thermoplastischen Polyurethan-Material ≥ 50 Prozentpunkte bis ≤ 100 Prozentpunkte beträgt und die die Differenz der Reißdehnungen zwischen zweitem und drittem thermoplastischen Polyurethan-Material ≥ 50 Prozentpunkte bis ≤ 100 Prozentpunkte beträgt.

7. Verfahren gemäß einem der Ansprüche 1 bis 6, **dadurch gekennzeichnet, dass** das Aufbaumaterial hinsichtlich seiner schmelzbaren Anteile einen Schmelzbereich (DSC, differential scanning calorimetry; 2. Aufheizung mit Aufheizrate 20 K/min.) aufweist, welcher im Temperaturbereich von ≥ 30 °C bis ≤ 90 °C liegt.

8. Verfahren gemäß einem der Ansprüche 1 bis 6, **dadurch gekennzeichnet, dass** das Aufbaumaterial hinsichtlich seiner schmelzbaren Anteile einen Schmelzbereich (DSC, differential scanning calorimetry; 2. Aufheizung mit Aufheizrate 20 K/min.) aufweist, welcher im Temperaturbereich von ≥ 100 °C bis ≤ 240 °C liegt.

9. Verfahren gemäß einem der Ansprüche 1 bis 8, **dadurch gekennzeichnet, dass** die Herstellung des Gegenstands mittels des additiven Fertigungsverfahrens die Schritte umfasst:
- Auftragen einer Schicht aus das Aufbaumaterial aufweisenden Partikeln auf eine Zielfläche;
- Einwirken von Energie auf einen ausgewählten Teil der Schicht, entsprechend einem Querschnitt des Gegenstandes, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

10. Verfahren gemäß einem der Ansprüche 1 bis 9, **dadurch gekennzeichnet, dass** wenigstens eines der thermoplastischen Materialien in dem Aufbaumaterial ein thermoplastisches Polyurethan-Elastomer ist, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

11. Verfahren gemäß einem der Ansprüche 1 bis 10, **dadurch gekennzeichnet, dass** wenigstens eines der thermoplastischen Materialien in dem Aufbaumaterial ein thermoplastisches Polyurethan-Elastomer ist, das erhältlich ist aus der Reaktion der Komponenten:
a) mindestens ein organisches Diisocyanat
b) mindestens eine mit gegenüber Isocyanatgruppen reaktiven Gruppen aufweisenden Verbindung mit einem zahlenmittleren Molekulargewicht (Mₙ) von ≥ 500 g/mol bis ≤ 6000 g/mol und einer zahlenmittleren Funktionalität der Gesamtheit der Komponenten unter b) von ≥ 1,8 bis ≤ 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

## Claims

1. Process for producing an article, comprising the step of producing the article by means of an additive manufacturing method from a build material, **characterized in that** the build material comprises a mixture of a multitude of pulverulent thermoplastic polyurethane materials that differ from one another by their Shore hardness (DIN ISO 7619-1).

2. Process according to Claim 1, **characterized in that** the build material comprises a first pulverulent thermoplastic polyurethane material and a second pulverulent thermoplastic polyurethane material, where the first pulverulent thermoplastic polyurethane material has a Shore hardness (DIN ISO 7619-1) of ≥ 40A to ≤ 90D, the second pulverulent thermoplastic polyurethane material has a Shore hardness (DIN ISO 7619-1) of ≥ 40A to ≤ 90D, and the difference in Shore hardnesses between the first and second pulverulent thermoplastic polyurethane material is ≥ 2A to ≤ 40A and/or ≥ 2D to ≤ 60D.

3. Process according to Claim 1, **characterized in that** the build material comprises a first pulverulent thermoplastic polyurethane material, a second pulverulent thermoplastic polyurethane material and a third pulverulent thermoplastic polyurethane material, where the first pulverulent thermoplastic polyurethane material has a Shore hardness (DIN ISO 7619-1) of ≥ 40A to ≤ 90D, the second pulverulent thermoplastic polyurethane material has a Shore hardness (DIN ISO 7619-1) of ≥ 40A to ≤ 90D, the third pulverulent thermoplastic polyurethane material has a Shore hardness (DIN ISO 7619-1) of ≥ 40A to ≤ 90D, the difference in Shore hardnesses between the first and second pulverulent thermoplastic polyurethane material is ≥ 2A to ≤ 40A and/or ≥ 2D to ≤ 60D and the difference in Shore hardnesses between the second and third pulverulent thermoplastic polyurethane material is ≥ 5A to ≤ 30A and/or ≥ 5D to ≤ 30D.

4. Process according to any of Claims 1 to 3, **characterized in that** the build material comprises a multitude of pulverulent thermoplastic polyurethane materials that differ from one another by their elongation at break (DIN 53504, 200 mm/min).

5. Process according to Claim 4, **characterized in that** the build material comprises a first pulverulent thermoplastic polyurethane material and a second pulverulent thermoplastic polyurethane material, where the first pulverulent thermoplastic polyurethane material has an elongation at break (DIN 53504, 200 mm/min) of ≥ 200% to ≤ 800%, the second pulverulent thermoplastic polyurethane material has an elongation at break (DIN 53504, 200 mm/min) of ≥ 100% to ≤ 400%, and the difference in elongations at break between the first and second pulverulent thermoplastic polyurethane material is ≥ 50 percentage points to ≤ 700 percentage points.

6. Process according to Claim 4, **characterized in that** the build material comprises a first thermoplastic polyurethane material, a second thermoplastic polyurethane material and a third thermoplastic polyurethane material, where the first thermoplastic polyurethane material has an elongation at break (DIN 53504, 200 mm/min) of ≥ 200% to ≤ 600%, the second thermoplastic polyurethane material has an elongation at break (DIN 53504, 200 mm/min) of ≥ 200% to ≤ 600%, the third thermoplastic polyurethane material has an elongation at break (DIN 53504, 200 mm/min) of ≥ 200% to ≤ 600%, the difference in elongations at break between the first and second thermoplastic polyurethane material is ≥ 50 percentage points to ≤ 100 percentage points and the difference in elongations at break between the second and third thermoplastic polyurethane material is ≥ 50 percentage points to ≤ 100 percentage points.

7. Process according to any of Claims 1 to 6, **characterized in that** the build material, with regard to its fusible moieties, has a melting range (DSC, differential scanning calorimetry; 2nd heating at heating rate 20 K/min.) within the temperature range from ≥ 30°C to ≤ 90°C.

8. Process according to any of Claims 1 to 6, **characterized in that** the build material, with regard to its fusible moieties, has a melting range (DSC, differential scanning calorimetry; 2nd heating at heating rate 20 K/min.) within the temperature range from ≥ 100°C to ≤ 240°C.

9. Process according to any of Claims 1 to 8, **characterized in that** the production of the article by means of the additive manufacturing method comprises the steps of:
- applying a layer of particles comprising the build material to a target surface;
- introducing energy into a selected portion of the layer corresponding to a cross section of the article such that the particles in the selected portion are bonded;
- repeating the steps of applying and introducing energy for a multitude of layers, such that the bonded portions of the adjacent layers become bonded in order to form the article.

10. Process according to any of Claims 1 to 9, **characterized in that** at least one of the thermoplastic materials in the build material is a thermoplastic polyurethane elastomer obtainable from the reaction of a polyisocyanate component and a polyol component, where the polyol component comprises a polyester polyol having a pour point (ASTM D5985) of ≥ 25°C.

11. Process according to any of Claims 1 to 10, **characterized in that** at least one of the thermoplastic materials in the build material is a thermoplastic polyurethane elastomer obtainable from the reaction of the following components:
a) at least one organic diisocyanate
b) at least one compound having isocyanate-reactive groups and having a number-average molecular weight (Mₙ) of ≥ 500 g/mol to ≤ 6000 g/mol and a number-average functionality of the sum total of the components b) of ≥ 1.8 to ≤ 2.5
c) at least one chain extender having a molecular weight (Mn) of 60-450 g/mol and a number-average functionality of the sum total of the chain extenders c) of 1.8 to 2.5.

## Revendications

1. Procédé pour la fabrication d'un objet, comprenant l'étape de fabrication de l'objet au moyen d'un procédé de fabrication additive en un matériau de construction, **caractérisé en ce que** le matériau de construction comprend un mélange d'une multitude de matériaux thermoplastiques sous forme de poudre à base de polyuréthane, qui se distinguent les uns des autres par leur dureté Shore (DIN ISO 7619-1).

2. Procédé selon la revendication 1, **caractérisé en ce que** le matériau de construction comprend un premier matériau thermoplastique sous forme de poudre à base de polyuréthane et un deuxième matériau thermoplastique sous forme de poudre à base de polyuréthane, le premier matériau thermoplastique sous forme de poudre à base de polyuréthane présentant une dureté Shore (DIN ISO 7619-1) de ≥ 40A à ≤ 90D, le deuxième matériau thermoplastique sous forme de poudre à base de polyuréthane présentant une dureté Shore (DIN ISO 7619-1) de ≥ 40A à ≤ 90D et la différence des duretés Shore entre le premier et le deuxième matériau thermoplastique sous forme de poudre à base de polyuréthane étant de ≥ 2A à ≤ 40A et/ou de ≥ 2D à ≤ 60D.

3. Procédé selon la revendication 1, **caractérisé en ce que** le matériau de construction comprend un premier matériau thermoplastique sous forme de poudre à base de polyuréthane, un deuxième matériau thermoplastique sous forme de poudre à base de polyuréthane et un troisième matériau thermoplastique sous forme de poudre à base de polyuréthane, le premier matériau thermoplastique sous forme de poudre à base de polyuréthane présentant une dureté Shore (DIN ISO 7619-1) de ≥ 40A à ≤ 90D, le deuxième matériau thermoplastique sous forme de poudre à base de polyuréthane présentant une dureté Shore (DIN ISO 7619-1) de ≥ 40A à ≤ 90D, le troisième matériau thermoplastique sous forme de poudre à base de polyuréthane présentant une dureté Shore (DIN ISO 7619-1) de ≥ 40A à ≤ 90D, la différence des duretés Shore entre le premier et le deuxième matériau thermoplastique sous forme de poudre à base de polyuréthane étant de ≥ 2A à ≤ 40A et/ou de ≥ 2D à ≤ 60D et la différence des duretés Shore entre le deuxième et le troisième matériau thermoplastique sous forme de poudre à base de polyuréthane étant de ≥ 5A à ≤ 30A et/ou de ≥ 5D à ≤ 30D.

4. Procédé selon l'une quelconque des revendications 1 à 3, **caractérisé en ce que** le matériau de construction comprend une multitude de matériaux thermoplastiques sous forme de poudre à base de polyuréthane, qui se distinguent les uns des autres par leur allongement à la rupture (DIN 53504, 200 mm/min).

5. Procédé selon la revendication 4, **caractérisé en ce que** le matériau de construction comprend un premier matériau thermoplastique sous forme de poudre à base de polyuréthane et un deuxième matériau thermoplastique sous forme de poudre à base de polyuréthane, le premier matériau thermoplastique sous forme de poudre à base de polyuréthane présentant un allongement à la rupture (DIN 53504, 200 mm/min) de ≥ 200% à ≤ 800%, le deuxième matériau thermoplastique sous forme de poudre à base de polyuréthane présentant un allongement à la rupture (DIN 53504, 200 mm/min) de ≥ 100% à ≤ 400% et la différence des allongements à la rupture entre le premier et le deuxième matériau thermoplastique sous forme de poudre à base de polyuréthane étant de ≥ 50 points de pourcentage à ≤ 700 points de pourcentage.

6. Procédé selon la revendication 4, **caractérisé en ce que** le matériau de construction comprend un premier matériau thermoplastique à base de polyuréthane, un deuxième matériau thermoplastique à base de polyuréthane et un troisième matériau thermoplastique à base de polyuréthane, le premier matériau thermoplastique à base de polyuréthane présentant un allongement à la rupture (DIN 53504, 200 mm/min) de ≥ 200% à ≤ 600%, le deuxième matériau thermoplastique à base de polyuréthane présentant un allongement à la rupture (DIN 53504, 200 mm/min) de ≥ 200% à ≤ 600%, le troisième matériau thermoplastique à base de polyuréthane présentant un allongement à la rupture (DIN 53504, 200 mm/min) de ≥ 200% à ≤ 600%, la différence des allongements à la rupture entre le premier et le deuxième matériau thermoplastique à base de polyuréthane étant de ≥ 50 points de pourcentage à ≤ 100 points de pourcentage et la différence des allongements la rupture entre le deuxième et le troisième matériau thermoplastique à base de polyuréthane étant de ≥ 50 points de pourcentage à ≤ 100 points de pourcentage.

7. Procédé selon l'une quelconque des revendications 1 à 6, **caractérisé en ce que** le matériau de construction présente, en ce qui concerne ses proportions fusibles, une plage de fusion (DSC, calorimétrie différentielle à balayage ; 2ème chauffage à une vitesse de chauffage de 20 K/min) qui se situe dans la plage de température de ≥ 30°C à ≤ 90°C.

8. Procédé selon l'une quelconque des revendications 1 à 6, **caractérisé en ce que** le matériau de construction présente, en ce qui concerne ses proportions fusibles, une plage de fusion (DSC, calorimétrie différentielle à balayage ; 2ème chauffage à une vitesse de chauffage de 20 K/min) qui se situe dans la plage de température de ≥ 100°C à ≤ 240°C.

9. Procédé selon l'une quelconque des revendications 1 à 8, **caractérisé en ce que** la fabrication de l'objet au moyen du procédé de fabrication additive comprend les étapes :
- application d'une couche de particules présentant le matériau de construction sur une surface cible ;
- action d'énergie sur une partie sélectionnée de la couche, correspondant à une section transversale de l'objet, de telle sorte que les particules dans la partie sélectionnée sont reliées ;
- répétition des étapes d'application et d'action d'énergie pour une multitude de couches, de telle sorte que les parties reliées des couches adjacentes se relient pour former l'objet.

10. Procédé selon l'une quelconque des revendications 1 à 9, **caractérisé**
**en ce qu'**au moins l'un des matériaux thermoplastiques dans le matériau de construction est un élastomère thermoplastique à base de polyuréthane qui peut être obtenu par la réaction d'un composant polyisocyanate et d'un composant polyol, le composant polyol comprenant un polyester-polyol qui présente un point d'écoulement (ASTM D5985) ≥ 25°C.

11. Procédé selon l'une quelconque des revendications 1 à 10, **caractérisé**
**en ce qu'**au moins l'un des matériaux thermoplastiques dans le matériau de construction est un élastomère thermoplastique qui peut être obtenu par réaction des composants :
a) au moins un diisocyanate organique,
b) au moins un composé présentant des groupes réactifs par rapport aux groupes isocyanate, lequel composé présente un poids moléculaire moyen en nombre (Mₙ) de ≥ 500 g/mole à ≤ 6 000 g/mole et une fonctionnalité moyenne en nombre de la totalité des composants sous b) de ≥ 1,8 à ≤ 2,5,
c) au moins un agent d'allongement de chaîne présentant un poids moléculaire (Mₙ) de 60-450 g/mole et une fonctionnalité moyenne en nombre de la totalité des agents d'allongement de chaîne sous c) de 1,8 à 2,5.
